# EUROPEAN PATENT APPLICATION

(11) **EP 4 332 846 A1**
(43) Date of publication of application: **06.03.2024**
(21) Application number: 22795418.7
(22) Date of filing: 25.03.2022
(51) Int. Cl.: G06N 20/00, G06T 7/00, G06T 7/20

(54) **MOTION ANALYZING DEVICE, MOTION ANALYSIS METHOD, MOTION ANALYZING PROGRAM, AND MOTION ANALYZING SYSTEM**

(30) Priority: 28.04.2021 JP 2021075979
(71) Applicant: OMRON Corporation, Kyoto 600-8530 (JP)
(72) Inventor: NISHIDA, Kazuki, Kyoto-shi, Kyoto 600-8530 (JP); ASAI, Kyohei, Kyoto-shi, Kyoto 600-8530 (JP); AKATSUKA, Mayumi, Kyoto-shi, Kyoto 600-8530 (JP)
(74) Representative: Appelt, Christian W.
(86) International application number: PCT/JP2022/014388
(87) International publication number: WO 2022/230501

(57) **Abstract**

A motion analysis device presents a factor to be aware in performing a motion. The motion analysis device includes a trained model (19b) trained so as to take as input time-series information about a motion performed to achieve a specific target, and take as output result information about a result from the motion, a receiver (12) that receives target time-series information about a target motion to be analyzed, an extractor (13) that extracts, based on result information estimated by inputting the received target time-series information into the trained model (19b), descriptive information indicating a factor in the target motion contributing to the estimated result information, and an output unit (14) that outputs information about a result of analysis of the target motion based on the extracted descriptive information.

## Description

### FIELD

The present invention relates to a motion analysis device, a motion analysis method, a motion analysis program, and a motion analysis system.

### BACKGROUND

At training sites for various sports or at production sites such as factories, the capability of a player or the skill of a worker may be assessed by analyzing the motion of the player or the worker. For example, Patent Literature 1 describes an assessment system that objectively assesses the motion of a player who is taking exercise.

The assessment system identifies the play or performance of the player to be assessed based on motion data indicating a series of motions of the player through classification machine learning, and assesses the degree of attainment in the identified play or performance through regression machine learning. This allows the player and an instructor to identify the degree of attainment in the play or performance of the player.

### CITATION LIST

### PATENT LITERATURE

Patent Literature 1: Japanese Unexamined Patent Application Publication No. 2018-68516

### SUMMARY OF THE INVENTION

### TECHNICAL PROBLEM

A person who has been playing a sport and has performed successfully may have no idea about the reason for the success of the play. For example, a person playing a game of darts may have no idea about the timing and the motion of particular joints that have made a dart hitting the center of the dartboard.

The assessment system described in Patent Literature 1 can present the assessment of a play, but cannot present a factor for a successful play.

One or more aspects of the present invention are directed to provide a motion analysis device, a motion analysis method, a motion analysis program, and a motion analysis system for presenting a notable factor in performing a motion.

### SOLUTION TO PROBLEM

A motion analysis device according to one aspect of the present disclosure includes a trained model trained so as to take as input the time-series information about a motion performed to achieve a specific target, and to take as output the result information about a result caused by the motion, a receiver that receives target time-series information about a target motion to be analyzed, an extractor that extracts, based on result information estimated by inputting the received target time-series information into the trained model, descriptive information indicating a factor in the target motion contributing to the estimated result information, and an output unit that outputs information about a result of analysis of the target motion based on the extracted descriptive information.

The structure according to this aspect allows information indicating which part of the target motion that has affected the result and how the part of the target motion has affected the result to be extracted from the time-series information based on the result information estimated by inputting the time-series information about the target motion into the trained model, and allows the analysis result of the target motion to be output based on the extracted information.

In the above aspect, the receiver may further receive target result information about a result caused by the target motion. The extractor may extract, based on the result information estimated by inputting the received target time-series information into the trained model, descriptive information indicating a factor in the target motion contributing to an estimation of the target result information.

The structure according to this aspect can extract information indicating which part of the target motion that has affected the result and how the part of the target motion has affected the result when the trained model has low accuracy.

In the above aspect, the descriptive information may include information indicating any timing between the start and the end of the target motion contributing to the estimated result information and information indicating a part of a body contributing to the estimated result information.

The structure according to this aspect allows the user to objectively identify the body part in performing the target motion and the timing of the motion which should be aware of.

In the above aspect, the time-series information may include skeletal data, and the part of the body may include a joint.

The structure according to this aspect allows the joint in performing the target motion and the timing of the motion which should be aware of to be objectively recognized by viewing the skeletal data.

A motion analysis method according to another aspect of the present disclosure is implementable with a processor. The method includes training, so as to take as input the time-series information about a motion performed to achieve a specific target, and to take as output the result information about a result from the motion to create a trained model, receiving target time-series information about a target motion to be analyzed, extracting, based on result information estimated by inputting target time-series information into the trained model, descriptive information indicating a factor in the target motion contributing to the estimated result information, and outputting information about a result of analysis of the target motion based on the extracted descriptive information.

The method according to this aspect allows information indicating which part of the target motion that has affected the result and how the part of the target motion has affected the result to be extracted from the time-series information based on the result information estimated by inputting the time-series information about the target motion into the trained model, and allows the analysis result of the target motion to be output based on the extracted information.

A motion analysis program according to another aspect of the present disclosure causes a computer to function as a trained model trained so as to take as input time-series information about a motion performed to achieve a specific target and to take as output result information about a result from the motion, a receiver that receives target time-series information about a target motion to be analyzed, an extractor that extracts, based on result information estimated by inputting the received target time-series information into the trained model, descriptive information indicating a factor in the target motion contributing to the estimated result information, and an output unit that outputs information about a result of analysis of the target motion based on the extracted descriptive information.

The program according to this aspect allows information indicating which part of the target motion that has affected the result and how the part has affected the result to be extracted from the time-series information based on the result information estimated by inputting the time-series information about the target motion into the trained model, and allows the analysis result of the target motion to be output based on the extracted information.

A motion analysis system according to another aspect of the present disclosure includes a sensor terminal and a motion analysis device. The sensor terminal includes a detector that detects a motion performed to achieve a specific target and outputs time-series information about the motion, and a transmitter that transmits the output time-series information as target time-series information about a target motion to be analyzed. The motion analysis device includes a trained model trained so as to take as input the time-series information and to take as output result information about a result caused by the motion, a receiver that receives the target time-series information, an extractor that extracts, based on result information estimated by inputting the received target time-series information input into the trained model, descriptive information indicating a factor in the target motion contributing to the estimated result information, and an output unit that outputs information about a result of analysis of the target motion based on the extracted descriptive information.

The structure according to this aspect allows information indicating which part of the target motion that has affected the result and how the part has affected the result to be extracted from the time-series information based on the result information estimated by inputting the time-series information about the target motion into the trained model, and allows the analysis result of the target motion to be output based on the extracted information.

### ADVANTAGEOUS EFFECTS

The motion analysis device, the motion analysis method, the motion analysis program, and the motion analysis system according to the above aspects of the present invention can present a factor to be aware of in performing a motion.

### BRIEF DESCRIPTION OF THE DRAWINGS

FIG. 1 is a diagram of a motion analysis system according to an embodiment of the present invention.
FIG. 2 is a diagram of an example screen for inputting target result information.
FIG. 3 is a diagram of an example image appearing on a display of a sensor terminal based on a result of analysis.
FIG. 4 is a diagram of a motion analysis device according to the embodiment, showing its hardware configuration.
FIG. 5 is a flowchart of a process for storing training data performed by the motion analysis device according to the embodiment.
FIG. 6 is a flowchart of a model training process performed by the motion analysis device according to the embodiment.
FIG. 7 is a flowchart of a motion analysis process performed by the motion analysis device according to the embodiment.

### DETAILED DESCRIPTION

One or more embodiments of the present invention (hereafter, the present embodiment) will now be described with reference to the drawings. In the figures, the components with the same reference numerals have the same or similar structures.

### 1. Example Use

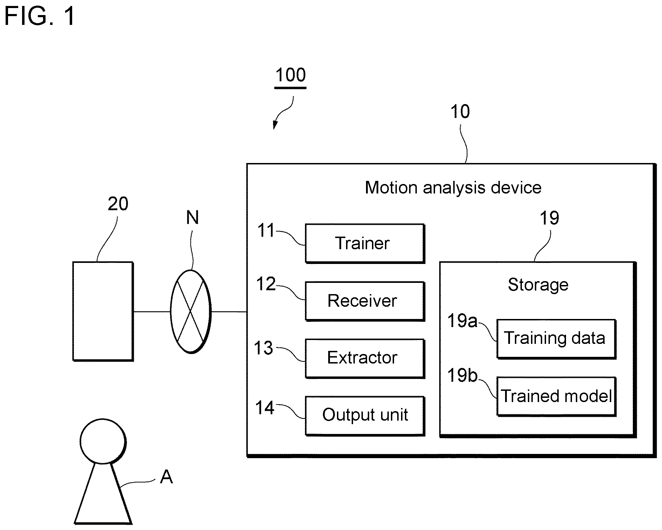

An example use of the structure according to one embodiment of the present invention will now be described with reference to FIG. 1. A motion analysis system 100 according to the present embodiment includes a sensor terminal 20, such as a smartphone, that captures an image of a motion of a user A with a camera thereof and transmits, to a motion analysis device 10, motion data (example of time series information) extracted from the captured image as a target motion to be analyzed and a result caused by the motion of the user A as an analysis result of the target motion. The motion analysis device 10 extracts, based on result information estimated by inputting the target motion into a trained model 19b, descriptive information indicating a factor contributing to the estimated analysis result of the target motion, and outputs, to the sensor terminal 20, the descriptive information as a result of analysis of the motion of the user A.

The motion analysis device 10 may extract the descriptive information indicating what factor contributes to the estimated result based on a result that is output by inputting the target motion into the trained model 19b.

Examples of the motion of the user A include throwing a dart to a dartboard as playing a game of darts, putting a golf ball toward a cup on a putting golf course, and hitting back a table tennis ball to a target area in table tennis.

Examples of the result caused by the motion of the user A include, in throwing a dart to a dartboard, the dart hitting the center of the dartboard, the dart hitting off the center of the dartboard upward, the dart hitting off the center of the dartboard downward, the dart hitting off the center of the dartboard rightward, the dart hitting off the center of the dartboard leftward, and the dart hitting off the dartboard.

The trained model 19b is an artificial intelligence (AI) model trained so as to take as input the motion data indicating a motion of a user, and to take as output the result information indicating a result from the motion of the user. For example, the trained model 19b takes as input the motion data indicating the motion of throwing a dart to a dartboard and takes as outputs the result information indicating whether the dart has hit the center of the dartboard. The trained model 19b will be described in detail later.

The descriptive information includes, for example, information indicating any timing between the start and the end of the target motion and information indicating a body part. This will be described in detail below.

For the analysis result of the target motion indicating that the dart has hit the center of the dartboard, the descriptive information may include information indicating that the timing is within three to four seconds after the start of the motion data and information indicating that the body part is a right elbow. This shows that the motion of the right elbow within three to four seconds after the start of the motion data is a factor contributing to the result that the dart has hit the center of the dartboard. In other words, this shows that the user can be aware of the motion of the right elbow within three to four seconds after the start of the motion to increase the probability of the dart hitting the center of the dartboard.

In this manner, the motion analysis device 10 according to the present embodiment can present, to the user, the factor that should be aware of in performing a motion.

### 2. Example Structure

### Functional Components

The functional components of the motion analysis system 100 according to the present embodiment will now be described with reference to FIG. 1. The motion analysis system 100 includes the sensor terminal 20 and the motion analysis device 10. The sensor terminal 20 and the motion analysis device 10 are connected to each other with a communication network N.

### Sensor Terminal 20

The sensor terminal 20 is, for example, a smartphone with a camera. The sensor terminal 20 captures, with the camera, an image of a scene of the user A performing a motion, extracts motion data from the captured image, and transmits the motion data to the motion analysis device 10.

The motion data includes, for example, skeletal data indicating the motion of the skeleton of the user, coordinate value data indicating the motion of the user, and sensor data indicating the motion of the user. However, not limited to the motion data, any time series information indicating the motion of the user may also be transmitted to the motion analysis device 10 Such time series information includes a video of the motion of the user in addition to the motion data.

The skeletal data may be detected by, for example, a skeletal detection application installed on a smartphone. The coordinate value data may be obtained through, for example, measurement performed by a motion capturer in place of the sensor terminal 20. The sensor data may be obtained through, for example, measurement performed by an acceleration sensor or a gyro sensor in place of the sensor terminal 20. The acceleration sensor or the gyro sensor may be worn on the user. The video may be captured with, for example, the camera in the smartphone. When the video is used, the motion analysis device 10 which received the video may detect the motion data such as the skeletal data.

In the present embodiment, the skeletal data used as example motion data is described

The sensor terminal 20 includes, as its functional components, for example, a detector, an input receiver, and a transmitter. The detector detects the motion of the user A and outputs the motion data indicating the motion of the skeleton of the user A.

The input receiver receives input of the result information about the result caused by the motion of the user A.

The transmitter transmits, to the motion analysis device 10, the motion data output from the detector and the result information received by the input receiver. The motion data is transmitted to the motion analysis device 10 as the motion data about the target motion to be analyzed (hereafter referred to as target motion data). The result information is transmitted to the motion analysis device 10 as the result information about the result caused by the target motion to be analyzed (hereafter referred to as target result information).

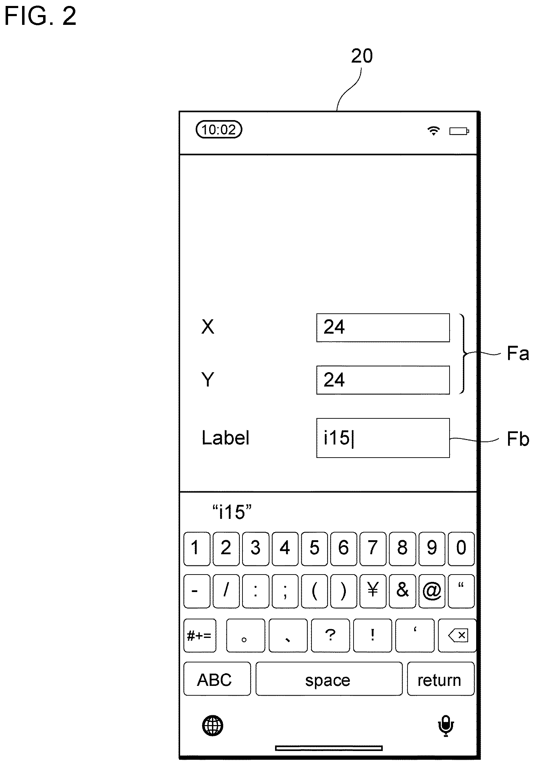

FIG. 2 shows an example screen for inputting the target result information. The screen in the figure is a screen to input result of throwing a dart to a dartboard. The sensor terminal 20 includes a display showing a field Fa for inputting the coordinates of an area hit by the dart and a field Fb for inputting a label ID for identifying the result of throwing the dart. The coordinates may be, for example, XY coordinates having the origin at the center of the dartboard. The label ID may be set for, for example, according to a location or an area on the dartboard. The location or the area on the dartboard may be, for example, the center of the dartboard, a location or an area upward from the center, a location or an area downward from the center, a location or an area rightward from the center, or a location or an area leftward from the center.

### Motion Analysis Device 10

The motion analysis device 10 shown in FIG. 1 includes, as its functional components, a trainer 11, a receiver 12, an extractor 13, an output unit 14, and a storage 19. The storage 19 stores, for example, training data 19a and the trained model 19b. Each functional component will be described below.

### Training Data 19a

The training data 19a includes motion data as the time series information about a motion performed to achieve a specific target and result information indicating a result caused by the motion. The motion data is stored in a manner associated with the result information.

Examples of the motion performed to achieve the specific target include throwing a dart to a dartboard in playing a game of darts, putting a golf ball toward a cup on a putter golf course, and hitting back a table tennis ball in a target area in table tennis.

Multiple pieces of result information may be set for each motion described above. After performing the motion, the user inputs, of the multiple pieces of set result information, a single piece of result information corresponding to the result caused by the motion into the sensor terminal 20. Example multiple pieces of result information set for each motion will be described below.

For the motion of throwing a dart to a dartboard, the result information may be set as, for example, the dart hitting the center of the dartboard, the dart hitting off the center of the dartboard upward, the dart hitting off the center of the dartboard downward, the dart hitting off the center of the dartboard rightward, the dart hitting off the center of the dartboard leftward, and the dart hitting off the dartboard.

For the motion of putting a golf ball toward a cup, the result information may be set as, for example, the golf ball putted into the cup, the golf ball not reaching the cup, and the golf ball moving beyond the cup.

For the motion of hitting back a table tennis ball in a target area may be set as, for example, the table tennis ball hitting the targeted area, the table tennis ball hitting off the target area upward, the table tennis ball hitting off the target area downward, the table tennis ball hitting off the target area rightward, and the table tennis ball hitting off the target area leftward.

### Trained Model 19b

The trained model 19b is an AI model trained using the training data 19a and is created by the trainer 11 described below.

### Trainer 11

The trainer 11 trains an AI model, so as to take as input the motion data of the training data 19a, and to take as output the result information about the training data 19a based on received, to create the trained model 19b. The AI model may be trained using, for example, graph convolutional network (GCN) or spatial temporal

### GCN (ST-GCN).

When, for example, the motion data indicating the motion of throwing a dart to a dartboard is input into the trained model 19b, the trained model 19b outputs result information indicating whether the dart has hit the center of the dartboard.

### Receiver 12

The receiver 12 receives the target motion data and the target result information from the sensor terminal 20.

### Extractor 13

The extractor 13 extracts, based on the result information estimated by inputting the target motion data into the trained model 19b, the descriptive information indicating a factor contributing to estimated target result information in the target motion data.

The result information estimated by inputting the target motion data into the trained model 19b may include, for example, multiple results set as results of the motion and the probability of each result. More specifically, the result of throwing the dart will be described using example results set as the dart hitting the center of the dartboard, or the dart not hitting the center of the dartboard.

In this case, the estimated result information may include, for example, information indicating that the probability of the dart hitting the center of the dartboard is 40%, and the probability of the dart not hitting the center of the dartboard is 60%.

When the trained model 19b has the accuracy of 100% or close to 100%, the result that is output by inputting the target motion data matches or substantially matches the result of the target result information. In this case, the extractor 13 may extract, based on the result output from the trained model 19b, the descriptive information corresponding to the result.

In contrast, when the trained model 19b has low accuracy, the result output from the trained model 19b may differ from the actual result. Assuming the above case, the extractor 13 may extract the descriptive information indicating the factor contributing to the result with the condition that the result is estimated to match the actual result as the target result information. When, for example, the result of throwing the dart is the dart hitting the center of the dartboard, the result information estimated based on the target motion data input into the trained model 19b may include information indicating that the probability of the dart hitting the center of the dartboard is 40%, and the probability of the dart not hitting the center of the dartboard is 60%. In this case, the extractor 13 extracts the descriptive information indicating the factor contributing to the result estimated by the trained model 19 both at the dart hitting the center of the dartboard.

The descriptive information includes, for example, information indicating any timing between the start and the end of the target motion data contributing to the estimated result and a body part contributing to the estimated result. The descriptive information may include a score (importance of the motion) indicating the degree of relevance of each body part to the motion in the target motion data.

The timing described above may be, for example, a period of time (e.g., seconds) from the start of the target motion data, or may be the number of frames from the start of the target motion data.

The body part described above can be identified as, for example, a shoulder joint, an elbow joint, or a wrist joint. In this case, the importance of the motion described above is calculated for each joint.

The descriptive information may be extracted using a visualization method based on any explainable AI, such as class activation mapping (CAM), gradient-weighted CAM (Grad-CAM), Grad-CAM++, attention branch network (ABN), or human-in-the-loop ABN (HITL-ABN).

### Output Unit 14

The output unit 14 outputs information about the analysis result of the target motion based on the descriptive information extracted by the extractor 13.

Specific examples of the information about the analysis result will be described below.

Case 1: The result information indicates that the dart has not hit the center of the dartboard, and the descriptive information includes the timing information indicating three to four seconds after the start of the motion data and the information indicating a right elbow identified as a part of the body.

In this case, information indicating that "the motion of the right elbow within three to four seconds after the start of the motion data" is a factor contributing to the result indicating that "the dart has not hit the center of the dartboard" is output as the information about the analysis result.

Case 2: The result information indicates that "the dart has hit the center of the dartboard", and the descriptive information includes the timing information indicating "three to four seconds after the start of the motion data" and the information indicating "a right elbow" and "a right wrist" identified as parts of the body.

In this case, information indicating that "the motion of the right elbow or the motion of the right wrist within three to four seconds after the start of the motion data" is a factor contributing to the result indicating that "the dart has hit the center of the dartboard" is output as the information about the analysis result.

The sensor terminal 20 displays, based on the information about the analysis result output from the output unit 14, the skeletal data superimposed on the motion of the user captured with the camera. This will be described in detail below.

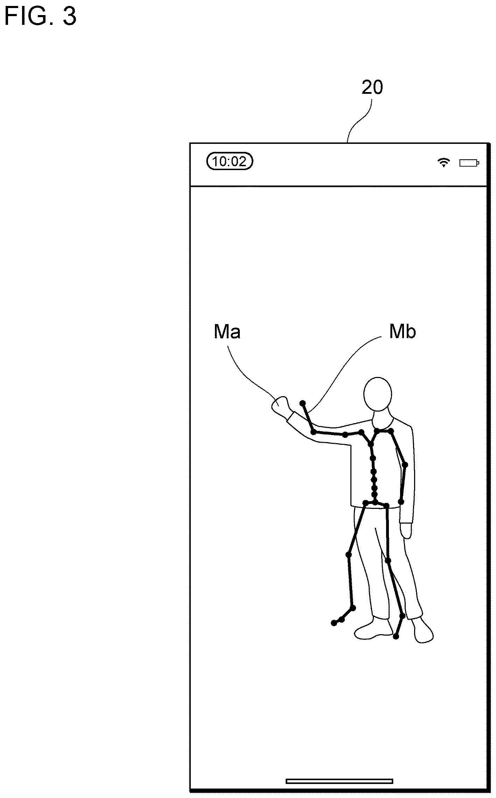

FIG. 3 shows one image appearing on the display in the sensor terminal 20 based on the information about the analysis result for case 2 described above.

Skeletal data Mb based on the information about the analysis result is superimposed on an image Ma of the user repeatedly throwing a dart and appears on the display in the sensor terminal 20.

Each joint in the skeletal data Mb may be displayed in a different color depending on, for example, the importance of the corresponding motion. For example, the color may be changed in the order of red, white, and blue as the importance of the motion increases.

For the information about the analysis result for case 2 described above, the motion of the right elbow and the motion of the right wrist within three to four seconds after the start is important. In this case, in the skeletal data Mb within three to four seconds after the start, the right elbow joint and the right wrist joint are displayed in blue, and the other joints are displayed in red.

Such an image allows the user to objectively identify the timing and the joints to be aware of in the motion of throwing a dart.
when the skeletal data based on the information about the analysis result is shown, it is not limited to be superimposed on the motion of the user, it may also be shown along with the image of user. The skeletal data may be displayed in synchronization with the motion of the user captured with the camera, but not limited to this way. For example, the video used to extract the motion data may be stored, and the skeletal data may then be displayed in synchronization with the motion of the user in the video when the video is played. The importance of the motion alone may be displayed in synchronization with the motion of the user. Further, a message indicating that, for example, "the motion of the right elbow and the motion of the right wrist within three to four seconds after the start is important "may be displayed.

### Hardware Configuration

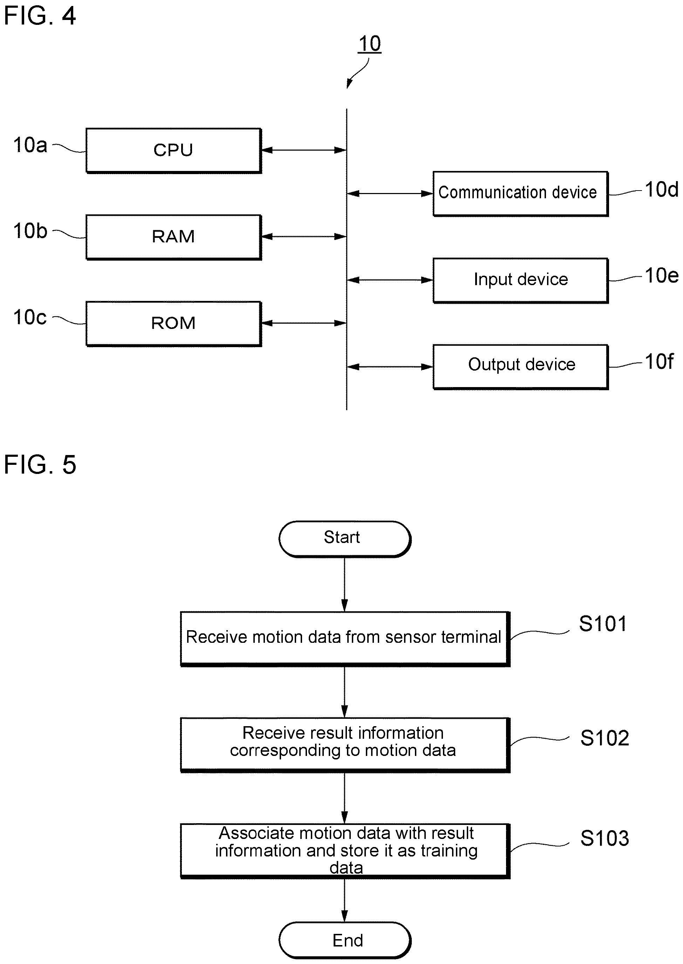

The hardware configuration of the motion analysis device 10 according to the present embodiment will now be described with reference to FIG. 4. The motion analysis device 10 includes a central processing unit (CPU) 10a as an arithmetic unit, a random-access memory (RAM) 10b as the storage 19, a read-only memory (ROM) 10c as the storage 19, a communication device 10d, an input device 10e as the receiver 12, and an output device 10f as the output unit 14. These components are interconnected with a bus to allow data communication between them. Although the motion analysis device 10 is implemented with a single computer in the present embodiment, the motion analysis device 10 may be implement with multiple computers.

The CPU 10a functions as a controller that executes programs stored in the RAM 10b or the ROM 10c and performs calculations and processing associated with data. The CPU 10a receives various items of input data from the input device 10e and the communication device 10d, and outputs the results of calculations using the input data from the output device 10f or stores the results into the RAM 10b or the ROM 10c. The CPU 10a in the present embodiment executes a program (motion analysis program) for outputting, based on the result estimated from a motion included in the motion data, the analysis result indicating the factor contributing to the result. The arithmetic unit is not limited to a CPU, may also be another processor such as a graphics processing unit (GPU).

The RAM 10b is, for example, a semiconductor memory that stores data in a rewritable manner. The ROM 10c is, for example, a semiconductor memory that stores data in a readable and non-rewritable manner.

The communication device 10d is an interface that connects the motion analysis device 10 to external devices. The communication device 10d is connected to the sensor terminal 20 through, for example, a communication network such as a local area network (LAN) or the Internet, and receives the motion data from the sensor terminal 20.

The input device 10e is an interface for receiving input of data from the user, and may include, for example, a keyboard, a mouse, and a touchscreen.

The output device 10f is an interface for outputting, for example, the results from calculations performed by the CPU 10a. The output device 10f may be a visual display interface. In this case, the output device 10f may include, for example, a liquid crystal display (LCD).

The motion analysis program may be stored in a computer-readable storage medium, such as the RAM 10b or the ROM 10c, to be provided. The motion analysis program may be provided through a communication network connected with the communication device 10d. The motion analysis device 10 may implement the operations of the trainer 11, the receiver 12, the extractor 13, and the output unit 14 shown in FIG. 1 using the CPU 10a to execute the motion analysis program. The physical structure described above is an example and may not necessarily be independent. For example, the motion analysis device 10 may include a large-scale integration (LSI) circuit integrated with the CPU 10a, the RAM 10b, and the ROM 10c.

### 3. Operation Example

An example process for storing the training data performed by the motion analysis device 10 according to the present embodiment will be described with reference to FIG. 5.

The receiver 12 in the motion analysis device 10 first receives, from the sensor terminal 20, the motion data about the motion performed by the user to achieve the specific target (step S101).

The receiver 12 in the motion analysis device 10 then receives, from the sensor terminal 20, the result information corresponding to the motion data received in step S101 (step S102).

Subsequently, the storage 19 in the motion analysis device 10 associated the motion data received in step S101 with the result information received in step S102 (step S103), and stored it as the training data 19a. This ends the process for storing training data.

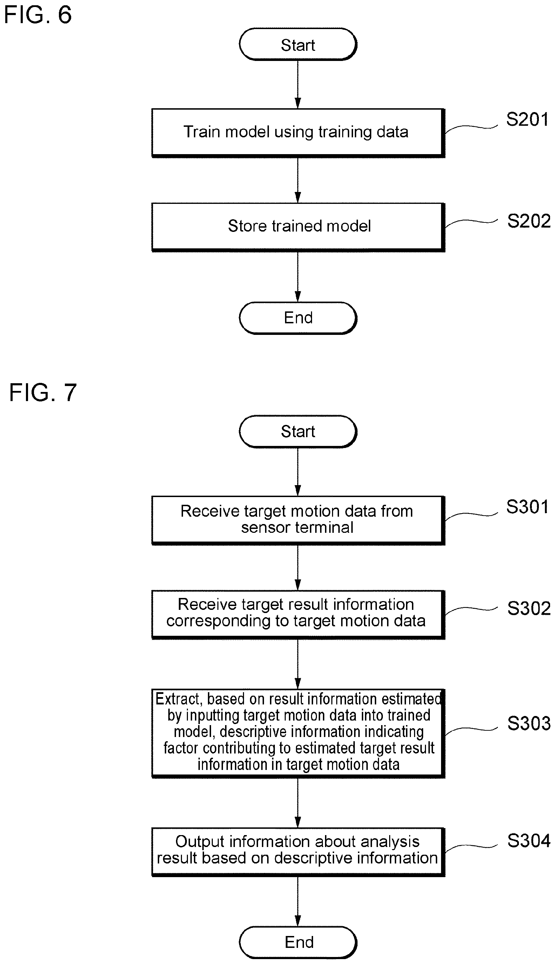

An example model training process performed by the motion analysis device 10 according to the present embodiment will be described with reference to FIG. 6.

The trainer 11 in the motion analysis device 10 first trains an AI model so as to take as input the motion data in the training data 19a and to take as output the result information about the training data 19a (step S201).

Subsequently, the storage 19 in the motion analysis device 10 stores the trained model 19b created through the training in step S201 (step S202). This ends the model training process.

An example motion analysis process performed by the motion analysis device 10 according to the present embodiment will be described with reference to FIG. 7.

The receiver 12 in the motion analysis device 10 first receives the target motion data from the sensor terminal 20 (step S301).

The receiver 12 in the motion analysis device 10 then receives the target result information corresponding to the target motion data from the sensor terminal 20 (step S302).

Subsequently, the extractor 13 in the motion analysis device 10 extracts, based on the result information estimated by inputting the target motion data received in step S301 into the trained model 19b, the descriptive information indicating the factor in the target motion data contributing to an estimated target result information received in step S302 (step S303).

Subsequently, the output unit 14 in the motion analysis device 10 outputs, based on the descriptive information extracted in step S303, the information about the analysis result of the target motion to be analyzed (step S304). This ends the motion analysis process.

This allows the skeletal data based on the information about the analysis result to appear on the display in the sensor terminal 20.

As described above, the motion analysis device 10 according to the present embodiment extracts, based on the result information estimated by inputting the motion data about the target motion into the trained model 19b, the information indicating which part of the body that has affected the result, and which timing in the target motion that has affected the result, and how the part has affected the result, and outputs the analysis result of the target motion based on the extracted information.

When the trained model 19b has low accuracy, the motion analysis device 10 according to the present embodiment extracts the information indicating which part of the body that has affected the result, which timing in the target motion that has affected the actual result, and how the part has affected the actual result.

The motion analysis device 10 according to the present embodiment can thus present the factor to be aware of in performing a motion.

Embodiments of the present invention may also be expressed in, but not limited to, the following appendixes. The embodiments of the present invention may also be modified by replacing or combining parts recited in the appendixes.

### Appendix 1

A motion analysis device (10), comprising:
a trained model (19b) trained so as to take as input time-series information about a motion performed to achieve a specific target, and to take as output result information about a result caused by the motion;
a receiver (12) configured to receive target time-series information about a target motion to be analyzed;
an extractor (13) configured to extract, based on result information estimated by inputting the received target time-series information into the trained model (19b), descriptive information indicating a factor in the target motion contributing to the estimated result information; and
an output unit (14) configured to output information about a result of analysis of the target motion to be analyzed based on the extracted descriptive information. Appendix 2

The motion analysis device (10) according to appendix 1, wherein
the receiver (12) further receives target result information about a result caused by the target motion to be analyzed, and
the extractor (13) extracts, based on the result information estimated by inputting the received target time-series information into the trained model, descriptive information indicating a factor in the target motion contributing to an estimated target result information.

### Appendix 3

The motion analysis device (10) according to appendix 1 or appendix 2, wherein
the descriptive information includes information indicating any timing between the start and the end of the target motion contributing to the estimated result information and information indicating a part of a body contributing to the estimated result information.

### Appendix 4

The motion analysis device (10) according to appendix 3, wherein
the time-series information is skeletal data, and the part of the body is a joint. Appendix 5

A motion analysis method implementable with a processor, the method comprising:
training, so as to take as input time-series information about a motion performed to achieve a specific target, and to take as output result information about a result from the motion, so that a trained model is created(19b);
receiving target time-series information about a target motion to be analyzed;
extracting, based on result information estimated by inputting the received target time-series information into the trained model (19b), descriptive information indicating a factor in the target motion contributing to the estimated result information; and
outputting information about a result of analysis of the target motion based on the extracted descriptive information.

### Appendix 6

A motion analysis program for causing a computer to function as:
a trained model (19b) trained so as to take as input time-series information about a motion performed to achieve a specific target, and to take as output result information about a result caused by the motion;
a receiver (12) configured to receive target time-series information about a target motion to be analyzed;
an extractor (13) configured to extract, based on inputting result information estimated based on the received target time-series information into the trained model (19b), descriptive information indicating a factor in the target motion contributing to the estimated result information; and
an output unit (14) configured to output information about a result of analysis of the target motion based on the extracted descriptive information.

### Appendix 7

A motion analysis system (100), comprising:
a sensor terminal (20); and
a motion analysis device (10),
wherein the sensor terminal (20) includes
   a detector configured to detect a motion performed to achieve a specific target and output time-series information about the motion, and
   a transmitter configured to transmit the output time-series information as target time-series information about a target motion to be analyzed, and
the motion analysis device (10) includes
   a trained model (19b) trained so as to take as input time-series information and to take as output result information about a result caused by the motion,
   a receiver (12) configured to receive the target time-series information,
   an extractor (13) configured to extract, based on result information estimated by inputting the received target time-series information into the trained model (19b), descriptive information indicating a factor in the target motion contributing to the estimated result information, and
an output unit (14) configured to output information about a result of analysis of the target motion based on the extracted descriptive information.

### REFERENCE SIGNS LIST

- 10: motion analysis device
- 10a: CPU
- 10b: RAM
- 10c: ROM
- 10d: communication device
- 10e: input device
- 10f: output device
- 11: trainer
- 12: receiver
- 13: extractor
- 14: output unit
- 19: storage
- 19a: training data
- 19b: trained model
- 20: sensor terminal
- 100: motion analysis system
- N: communication network
- A: user
- Ma: image of user
- Mb: skeletal data

## Claims

1. A motion analysis device, comprising:
a trained model trained, so as to take as input time-series information about a motion performed to achieve a specific target, and to take as output result information about a result caused by the motion;
a receiver configured to receive target time-series information about a target motion to be analyzed;
an extractor configured to extract, based on result information estimated by inputting the received target time-series information into the trained model descriptive information indicating a factor in the target motion contributing to the estimated result information; and
an output unit configured to output information about a result of analysis of the target motion to be analyzed based on the extracted descriptive information.

2. The motion analysis device according to claim 1, wherein
the receiver further receives target result information about a result caused by the target motion to be analyzed; and
the extractor extracts, based on the result information estimated based on the received target time-series information input into the trained model, descriptive information indicating a factor in the target motion contributing to estimated target result information.

3. The motion analysis device according to claim 1 or claim 2, wherein
the descriptive information includes information indicating any timing between the start and the end of the target motion to be analyzed contributing to the estimation, and information indicating a part of a body contributing to the estimation.

4. The motion analysis device according to claim 3, wherein
the time-series information is skeletal data, and the part of body is a joint.

5. A motion analysis method implementable with a processor, the method comprising:
training, so as to take as input time-series information about a motion performed to achieve a specific target, and to take as output result information about a result caused by the motion, so that a trained model is created;
receiving target time-series information about a target motion to be analyzed;
extracting, based on result information estimated by inputting the received target time-series information into the trained model, descriptive information indicating a factor in the target motion contributing to the estimated result information; and
outputting information about a result of analysis of the target motion to be analyzed based on the extracted descriptive information.

6. A motion analysis program for causing a computer to function as:
a trained model trained so as to take as input time-series information about a motion performed to achieve a specific target, and to take as output result information about a result from the motion;
a receiver configured to receive target time-series information about a target motion to be analyzed;
an extractor configured to extract, based on result information estimated by inputting the received target time-series information into the trained model, descriptive information indicating a factor in the target motion contributing to the estimated result information; and
an output unit configured to output information about a result of analysis of the target motion based on the extracted descriptive information.

7. A motion analysis system, comprising:
a sensor terminal; and
a motion analysis device,
wherein the sensor terminal includes
a detector configured to detect a motion performed to achieve a specific target and output time-series information about the motion, and
a transmitter configured to transmit the output time-series information as target time-series information about a target motion to be analyzed, and
the motion analysis device includes
a trained model trained so as to take as input the time-series information, and to take as output result information about a result caused by the motion,
a receiver configured to receive the target time-series information,
an extractor configured to extract, based on result information estimated by inputting the received target time-series information into the trained model, descriptive information indicating a factor in the target motion contributing to the estimated result information, and
an output unit configured to output information about a result of analysis of the target motion to be analyzed based on the extracted descriptive information.
